## Europäisches Patentamt

## European Patent Office

## Office européen des brevets

(11) Veröffentlichungsnummer: **0 095 633**
**A1**

# EUROPÄISCHE PATENTANMELDUNG

(21) Anmeldenummer: 83104763.4

(22) Anmeldetag: 14.05.83

(51) Int. Cl.³: **B 62 D 33/06**

(30) Priorität: **19.05.82 DE 3218871**

(43) Veröffentlichungstag der Anmeldung: 07.12.83
Patentblatt 83/49

(84) Benannte Vertragsstaaten: **AT DE FR GB NL SE**

(71) Anmelder: **Iveco Magirus Aktiengesellschaft,
Schillerstrasse 2, D-7900 Ulm/Donau (DE)**

(72) Erfinder: **Giurca, Octavian, Auf der Winterhalde 21,
D-7906 Blaustein 1 (DE)**

(74) Vertreter: **Socha, Peter, Iveco - Magirus
Aktiengesellschaft Postfach 2740 Schillerstrasse 2,
D-7900 Ulm (DE)**

(54) Elastische Abstützung für das vordere Ende eines Fahrerhauses von Nutzfahrzeugen.

(57) Elastische Abstützung für das vordere Ende (2) eines Fahrerhauses (1), insbesondere von Nutzfahrzeugen, mittels eines Torsionsstabes (14) als Federelement, der in einem quer verlaufenden Stützrohr (5) koaxial eingeschoben ist, das um eine Fahrzeugquerachse (22) schwenkbar am Fahrzeugrahmen (4) gelagert ist und an dem über Stützarme (10, 11) das Fahrerhaus (1) gehalten ist, wobei die Torsionsstabfeder (14) mit einem Ende (16) im Stützrohr (5) und mit dem anderen Ende (18) unter Vorspannung am Fahrzeugrahmen (4) befestigt ist und daß parallel zur Torsionsstabfeder (14) wirkende Stoßdämpfer (20, 21) mit einem Ende am Fahrerhaus (1) und mit dem anderen Ende am Stützrohr (5) oder am Fahrzeugrahmen (4) angelenkt sind.

**MAGIRUS-DEUTZ AG**　　　7900 Ulm/Donau, den 13. Mai 1982
　　　　　　　　　　　　　　Unsere Zeichen: MD 7/82 ESP Dah/b

Elastische Abstützung für das vordere Ende
eines Fahrerhauses von Nutzfahrzeugen
─────────────────────────────────

Die Erfindung bezieht sich auf eine elastische Abstützung für
das vordere Ende eines Fahrerhauses, insbesondere von Nutzfahrzeugen gemäß den im Oberbegriff des Anspruches 1 enthaltenen
Merkmalen.

Aus der DE-AS 20 24 173 ist es bekannt, das vordere Ende eines kippbaren Fahrerhauses über einen koaxial zur Kippachse
am Fahrzeugrahmen in Lagerbuchsen gehaltenen Torsionsstab
elastisch abzustützen. Der Torsionsstab erstreckt sich im wesentlichen über die gesamte Breite des Fahrerhauses und ist
mit seinen nach oben abgebogenen U-förmigen Enden in beiden
seitlichen Türrahmen befestigt. Die federnde Abstützung des
vorderen Fahrerhaus-Endes erfolgt über die nach beiden Seiten
der Längsträger auskragenden Enden des Torsionsstabes. Weiterhin ist der Torsionsstab gegenüber dem Fahrzeugrahmen mit Vorspannung eingebaut, so daß er gleichzeitig als Kippvorrichtung
zum Aufkippen des Fahrerhauses verwendet werden kann.
Von Nachteil ist, daß der Torsionsstab in der Betriebslage des
Fahrerhauses einer aus der Verdrehung und aus der elastischen
Abstützung hervorgerufenen Biegung zusammengesetzten Beanspruchung ausgesetzt ist. Da ein Torsionsstab bevorzugt nur in der
Lage ist Torsionsbeanspruchungen aufzunehmen, ergeben sich durch
die zusätzlichen Biegespannungen in der Belastung des Torsionsstabes sehr hohe Spannungsspitzen. Um diese Spannungsspitzen in
Grenzen zu halten, kann man den Querschnitt des Torsionsstabes
entsprechend vergrößern. Dies führt jedoch zu dem Nachteil, daß die Federungsrate der auf Biegung beanspruchten Stabteile wesentlich härter wird, durch die der Fahrkomfort nachteilig beeinflußt wird. Hinzu kommt bei der bekannten elastischen Abstützung noch der Nachteil, daß keinerlei Maßnahmen zur Dämpfung der auftretenden Federschwingungen vorgesehen sind.

Aus der US-PS 2.864.121 ist es weiterhin bekannt, das vordere Ende eines kippbaren Fahrerhauses von Nutzfahrzeugen über ein koaxial zur Kippachse angeordnetes Querrohr schwenkbar am Fahrzeugrahmen zu lagern. Innerhalb des Querrohres ist eine Drehstabfeder eingespannt, deren über beide Enden des Rohres vorragende Stabenden am Fahrerhaus mit Vorspannung befestigt sind. Bei dieser Lagerung ist das vordere Fahrerhaus jedoch vollkommen starr auf dem Fahrzeugrahmen abgestützt und die Drehstabfeder dient lediglich als Gewichtsausgleichsfeder zum Aufkippen des Fahrerhauses.

Ausgehend von dem bekannten Stand der Technik liegt der Erfindung nunmehr die Aufgabe zugrunde, für das vordere Ende eines Fahrerhauses unter Verwendung von an sich bekannten Drehstabfedern eine elastische Abstützung zu schaffen, bei der die Federelemente am Fahrzeug einen möglichst geringen Bauraum beanspruchen, bei der desweiteren die Bauteile der Abstützung einfach und billig hergestellt werden können und durch die für unterschiedlich schwere Fahrerhäuser jeweils ein möglichst guter Fahrkomfort erreicht wird.

Die Aufgabe ist erfindungsgemäß durch die im kennzeichnenden Teil des Anspruches 1 enthaltenen Merkmale gelöst.

Die erfindungsgemäße elastische Abstützung benötigt nur einen sehr geringen Bauraum und hat desweiteren den Vorteil, daß sie kostengünstig hergestellt und einfach montiert werden kann.

Ein weiterer Vorteil besteht darin, daß der Torsionsstab für
die elastische Abstützung des Fahrerhauses ausschließlich auf
Torsion beansprucht wird, wodurch Spannungsspitzen vermieden
werden. Außerdem hat dies den Vorteil, daß für die Dimensionierung des Drehstabes die ohne weiteres beherrschbaren Torsionskräfte ausschlaggebend sind und damit eine optimale Anpassung der Fahrerhausfederung an die unterschiedlichen Fahrerhausgrößen möglich ist. Schließlich ist noch ein Vorteil darin zu sehen, daß bei einem kippbaren Fahrerhaus der Torsionsstab das Aufkippen des Fahrerhauses unterstützt, so daß beim
Aufkippvorgang die Kippvorrichtung insgesamt entlastet wird und
daher bei der baulichen Ausgestaltung kleiner dimensioniert werden kann.

Gemäß Anspruch 2 ist eine besonders platzsparende Bauweise der
elastischen Abstützung gekennzeichnet.

Die in Anspruch 3 enthaltenen Maßnahmen eignen sich besonders
bei der Ab-stützung von schweren Fahrerhäusern.

Entsprechend dem Gewicht des Fahrerhauses bzw. der gewünschten
Federhärte besteht gemäß Anspruch 4 die Möglichkeit, daß die Torsionsstabfeder nur aus einem Torsionsstab besteht, dessen Länge
etwa der halben Rohrlänge bzw. der halben Fahrzeugbreite entspricht.

Eine günstige Anordnung bzw. Unterbringung der Stoßdämpfer wird
durch die Merkmale der Ansprüche 5 und 6 erreicht.

Um eine möglichst exakte Abstimmung zwischen dem Fahrerhausgewicht und der gewünschten Federrate erreichen zu können, ist die
Vorspannung der Torsionsstabfeder einstellbar ausgebildet.

Schließlich wird noch vorgeschlagen, daß die Ein- und Ausfederbewegungen der Stützarme durch Gummipuffer begrenzbar sind.

In der Zeichnung ist ein Ausführungsbeispiel der Erfindung
dargestellt.

Es zeigen:

Fig. 1          in einer schematischen Vorderansicht die erfindungsgemäße Abstützung des vorderen Endes
                eines Fahrerhauses am Fahrzeugrahmen.


Fig. 2          die elastische Abstützung aus Fig. 1 in einer
                Seitenansicht.

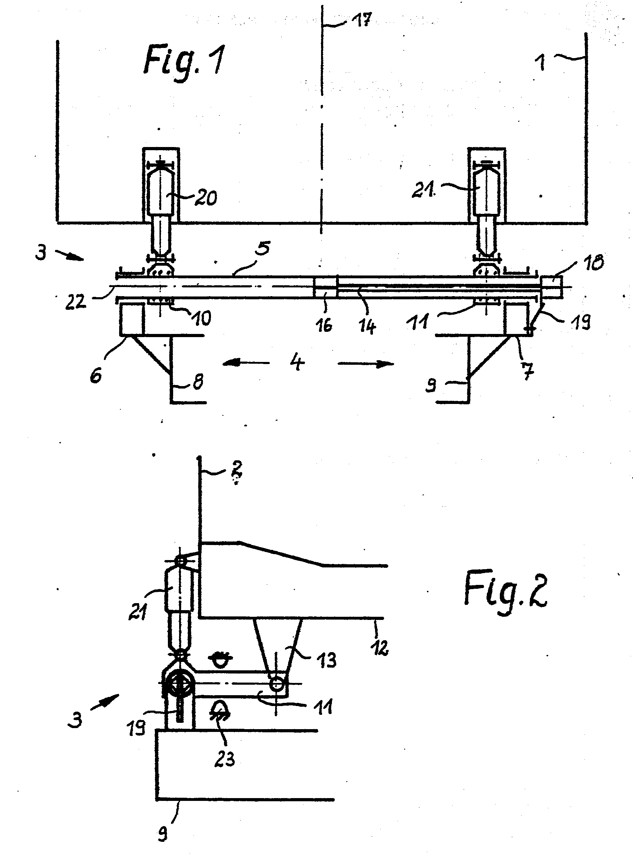

Das in den Figuren 1 und 2 angedeut-ete Fahrerhaus 1 ist mit
seinem vorderen Ende 2 über eine federnde Lagereinheit 3 auf
einem Fahrzeugrahmen 4 elastisch abgestützt. Die Lagereinheit 3
besteht aus einem quer zur Fahrzeuglängsrichtung verlaufenden
Stützrohr 5, das mit seinen seitlichen Enden über Lagerschilden
6 und 7 an beiden Längsträgern 8 und 9 des Fahrzeugrahmens 4
drehbar gelagert ist. An dem Stützrohr 5 sind innen vor beiden
Lagerschilden 6 und 7 im wesentlichen horizontal und in Längsrichtung angeordnete Stützarme 10 und 11 befestigt, an denen
das Fahrerhaus 1 über am Fahrerhausboden 12 befestigte Konsolen 13
angelenkt ist. Anzumerken ist noch, daß bei einem kippbaren Fahrerhaus 1 das Stützrohr 5 innerhalb der Kippachse 22 angeordnet
ist.

Als Federelement der Lagereinheit 3 dient ein Torsionsstab 14,
der koaxial im Innern des Stützrohres 5 eingesetzt ist und dessen Länge etwa der halben Fahrzeugbreite entspricht. Der von einer Seite in das Stützrohr 5 eingeschobene Drehstab 14 ist dabei
mit seinem innenliegenden Ende 16 etwa im Bereich der Fahrzeuglängsmittelachse 17 drehfest mit dem Stützrohr 5 verbunden.

Die Einspannung des Endes 16 kann dabei durch eine entsprechende Verformung des Stützrohres 5 oder andere geeignete Maßnahmen erfolgen. Das andere Ende 18 des Torsionsstabes 14 ragt über das seitliche Ende des Stützrohres 5 vor und ist über einen Spannhebel 19 an einem der Längsträger 8 und 9 des Fahrzeugrahmens 4 eingespannt. Die über den Spannhebel 19 einstellbare Vorspannkraft des Torsionsstabes 14 ist dabei so festgelegt, daß in Betriebslage des Fahrerhauses die Stützarme 10 und 11 in der bereits beschriebenen horizontalen Lage das auf die vordere Fahrerhauslagerung einwirkende Gewichtsmoment des Fahrerhauses 1 ausgleichen und bei auftretenden Relativbewegungen des Fahrerhauses 1 gegenüber dem Fahrzeugrahmen 4 jeweils nach oben oder unten ausschwenken können.

Anstelle des kurzen Torsionsstabes 14 kann auch ein Torsionsstab verwendet werden, der so lang ausgebildet ist, daß er die volle Fahrzeugbreite erreicht. Dieser Torsionsstab ist dann mit beiden Enden einerseits am Fahrzeugrahmen und etwa in der Mitte am Stützrohr 5 eingespannt. Selbstverständlich können auch zwei kurze Torsionsstäbe 14 zur Abfederung des Fahrerhauses 1 in das Stützrohr 5 eingeschoben werden.

Die Abmessungen des Stützrohres 5, insbesondere seine Wandstärke und sein Durchmesser sind so festgelegt, daß das Stützrohr 5 um seine Längsachse drehelastisch ist und somit gleichzeitig als Stabilisator wirkt.

Parallel zur Drehstabfeder 14 sind zwischen Fahrerhaus 1 und Fahrzeugrahmen 4 zwei Stoßdämpfer 20 und 21 vorgesehen. Um insbesondere bei einem kippbaren Fahrerhaus größere Relativbewegungen zwischen den fahrerhausseitigen und fahrgestellrahmenseitigen Anlenkpunkten der Stoßdämpfer 20 und 21 zu verm-eiden, sind diese innerhalb der vertikalen Längsmittelebene des Stützrohres 5 angeordnet und jeweils mit einem Ende am Fahrerhaus

- 8 -

selbst und mit dem anderen Ende an den Lagerschilden 6 und 7
angelenkt. Selbstverständlich ist auch eine direkte Anlenkung
der Stoßdämpfer am Stützrohr 5 oder an den Stützarmen 7 denkbar.

**MAGIRUS-DEUTZ AG**

7900 Ulm/Donau, den 13. Mai 1982
Unsere Zeichen: MD 7/82 ESP Dah/b

P a t e n t a n s p r ü c h e
— — — — — — — — — — — — —

1. Elastische Abstützung für das vordere Ende eines Fahrerhauses, insbesondere von Nutzfahrzeugen, mittels eines quer
zur Fahrtrichtung sich erstreckenden und mit einem Ende am
Fahrzeugrahmen und mit dem anderen Ende am Fahrerhaus eingespannten Torsionsstabes als Federelement, einem quer verlaufenden
Stabilisator und zwei parallel zum Torsionsstab zwischen Fahrerhaus und Fahrzeugrahmen wirkenden Stoßdämpfern, gekennzeichnet
durch die Kombination folgender z.T. für sich bekannter Merkmale, daß der Torsionsstab (14) koaxial in einem Stützrohr (5)
mit einem Ende (15) drehfest gehalten ist, daß das Stützrohr
(5) um eine Fahrzeugquerachse (Kippachse 22) schwenkbar in zwei
im Fahrzeugrahmen (4) befestigten Lagerschilden (6 und 7) gelagert ist, daß der Torsionsstab (14) über ein oder beide seitlichen Enden des Stützrohres (5) hinausragt und mit dem jeweils
vorstehenden Ende (18) am Fahrzeugrahmen (4) eingespannt ist,
daß am Stützrohr (5) Stützarme (10 und 11) befestigt sind, an
denen das Fahrerhaus (1) abgestützt ist, und daß die Stoßdämpfer
(20 bzw. 21) mit einem Ende am Fahrerhaus (1) und mit dem anderen
Ende an den rahmenseitigen Lagerelementen angelenkt sind.

2. Elastische Abstützung nach Anspruch 1, dadurch gekennzeichnet,
daß das Stützrohr (5) gleichzeitig den Stabilisator bildet.

3. Elastische Abstützung nach Anspruch 1 oder 2, dadurch gekennzeichnet, daß der Torsionsstab (14) aus zwei Torsionsstäben
zusammengesetzt ist, deren Längen jeweils etwa der halben Fahrzeugbreite entsprechen.

4.  Elastische Abstützung nach einem der Ansprüche 1 bis 3,
dadurch gekennzeichnet, daß der Torsionsstab (14) nur einen
Torsionsstab aufweist, dessen Länge etwa der halben Fahrzeugbreite entspricht.

5.  Elastische Abstützung nach einem der Ansprüche 1 bis 4,
dadurch gekennzeichnet, daß die Lagerschilde (6 und 7) außen
an beiden Längsträgern (8 und 9) befestigt sind und daß die
Stoßdämpfer mit ihren rahmenseitigen Enden an den Lagerschilden (6 und 7) angelenkt sind.

6.  Elastische Abstützung nach einem der Ansprüche 1 bis 5, dadurch gekennzeichnet, daß die rahmenseitigen Enden der Stoßdämpfer am Stützrohr (5) oder den Stützarmen (10 und 11) angelenkt sind.

7.  Elastische Abstützung nach einem der Ansprüche 1 bis 6, dadurch gekennzeichnet, daß die Vorspannung des Torsionsstabes (14)
einstellbar ausgebildet ist.

8.  Elastische Abstützung nach einem der Ansprüche 1 bis 7, dadurch gekennzeichnet, daß die Ein- und Ausfederbewegungen der
Stützarme (10 und 11) durch Gummipuffer (23) begrenzt sind.

9.  Elastische Abstützung nach einem der Ansprüche 1 bis 8, dadurch gekennzeichnet, daß die Stützarme (10 und 11) unmittelbar
vor den Innenseiten der Lagerschilde (6 und 7) angeordnet sind.

0095633

Fig.1

Fig.2

0095633

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | FR-A-2 048 545 (DAIMLER-BENZ)<br><br>* Ansprüche 1-4; Abbildungen 1,2 * | 1,2,5, 6,9 | B 62 D 33/06 |
| A | FR-A-1 413 633 (AB. VOLVO)<br>* Seite 2, linke Spalte, 2. Absatz; Abbildungen 1,3 * | 1,7 | |
| A | EP-A-0 047 628 (FORD)<br>* Ansprüche 1,2,4; Abbildung 1 * | 1 | |
| D | DE-A-2 024 173 (MAN) | | |
| D | US-A-2 864 121 (IMBER et al.) | | RECHERCHIERTE SACHGEBIETE (Int. Cl. 3) |
| | | | B 62 D 33/06 |

Der vorliegende Recherchenbericht wurde für alle Patentansprüche erstellt.

| Recherchenort | Abschlußdatum der Recherche | Prüfer |
|---|---|---|
| DEN HAAG | 26-08-1983 | OSBORNE J. |